# EUROPEAN PATENT SPECIFICATION

(11) **EP 1 709 895 B1**
(45) Date of publication and mention of the grant of the patent: **20.02.2008**
(21) Application number: 06111417.9
(22) Date of filing: 20.03.2006
(51) Int. Cl.: A47J 39/00

(54) **Trolley for carrying and distributing food trays, provided with at least two chambers at mutually different temperatures**
Wagen zum Transport und Verteilen von Essen auf Tabletts, der mindestens zwei Räume mit gegenseitig unterschiedlichen Temperaturen enthält
Chariot pour le transport et la distribution des plats sur plateaux, comprenant au moins deux zones à températures différentes

(30) Priority: 06.04.2005 IT MI20050571
(43) Date of publication of application: 11.10.2006
(73) Proprietor: Rational Production S.r.l., 24061 Albano S. Alessandro BG (IT)
(72) Inventor: CATTANEO, Ivan, 24060, CAROBBIO DEGLI ANGELI BG (IT); CATTANEO, Diego, 24020, RANICA BG (IT)
(74) Representative: Modiano, Micaela Nadia

(56) References cited:
- US-A- 5 159 973
- US-A- 5 992 411

## Description

The present invention relates to a trolley for carrying and distributing food trays provided with at least two chambers at mutually different temperatures.

Trolleys for carrying and distributing food trays are known which keep the food deposited on the trays at a temperature that is as close as possible to the optimum temperature.

In particular, trolleys are known which are provided internally with two chambers kept at mutually different temperatures, generally a heated chamber (i.e., a chamber kept at a temperature which is higher than the ambient temperature) and a refrigerated chamber (i.e., a chamber kept at a temperature which is lower than the ambient temperature). These trolleys are used with trays which have two regions designed to carry respectively food to be served hot and food to be served cold. In these trolleys there is usually an intermediate vertical partition, which separates the heated chamber from the refrigerated chamber and has a plurality of horizontal slots, which are mutually spaced vertically and along which the portion of the trays arranged between said two regions is inserted.

A trolley of this type is disclosed in the document US 515 99 73 A.

In these types of trolley, one of the biggest problems is keeping the chosen temperatures as long as possible inside the two chambers without having to supply energy from outside, i.e., without having to supply electric power to the trolley, so as to not hinder its movement during tray distribution.

The solution to this problem that is currently used is entrusted simply to the thermal insulation of the walls of the trolley, to the thermal inertia of the air inside the two chambers, and to the thermal inertia of the food itself.

In many cases, the thermal insulation of the trolley can be insufficient to ensure that satisfactory temperatures are kept inside the two chambers, with the consequence of an excessive refrigeration of the food placed in the heated chamber and of an excessive heating of the food placed in the refrigerated chamber.

The aim of the present invention is to solve the problem described above, by providing a trolley for carrying and distributing food trays, provided with at least two chambers at mutually different temperatures, which can ensure a distinctly higher performance than attainable with known types of trolley, particularly as regards keeping the temperature in the two chambers at satisfactory levels.

Within this aim, an object of the invention is to provide a trolley which is less affected than known types of trolley by external environmental conditions.

Another object of the invention is to provide a trolley which is extremely maneuverable and practical to use.

This aim and these and other objects, which will become better apparent hereinafter, are achieved by a trolley for carrying and distributing food trays, provided with at least two chambers at mutually different temperatures, which comprises a wheeled box-like structure which forms internally a compartment which is suitable to contain the trays to be carried and is divided into at least two chambers by an intermediate vertical partition, which has horizontally elongated slots which are mutually spaced vertically, said chambers comprising at least one first chamber and at least one second chamber and said slots being suitable to receive an intermediate portion of the trays, which can be positioned with one of their regions in said first chamber and with another region thereof in said second chamber, characterized in that it comprises first contact elements which can be heated and are arranged in said first chamber and second contact elements which can be refrigerated and are arranged in said second chamber, said contact elements being suitable to make contact with regions of the trays which are arranged respectively in said first chamber and in said second chamber.

Further characteristics and advantages of the invention will become better apparent from the following detailed description of a preferred but not exclusive embodiment of the trolley according to the invention, illustrated by way of non-limiting example in the accompanying drawings, wherein:

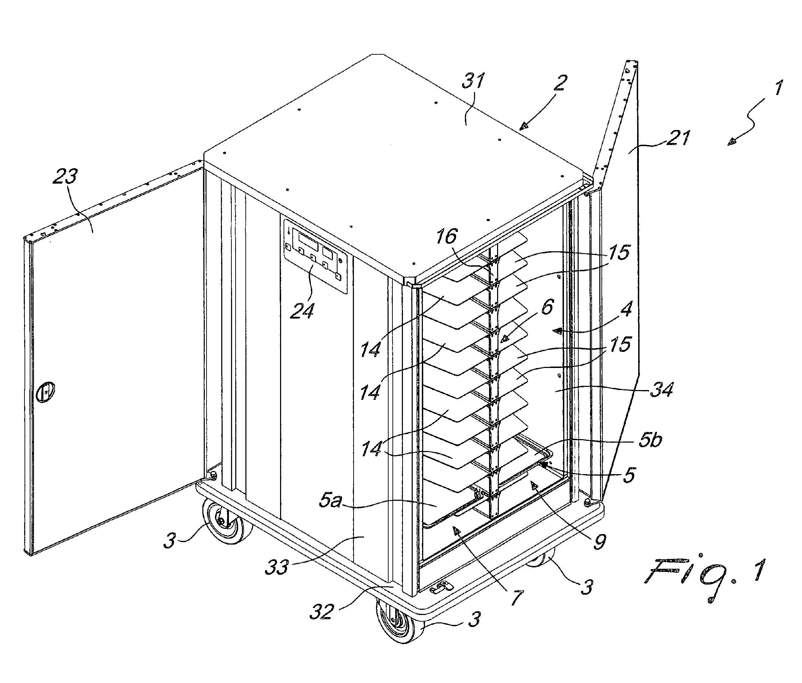

Figure 1 is a perspective view of the trolley according to the invention with two doors open;

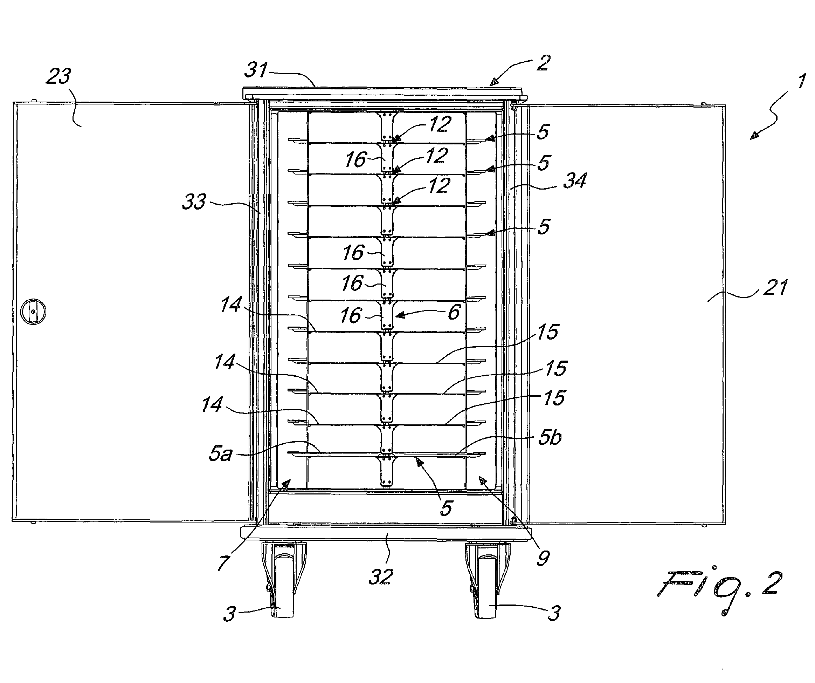

Figure 2 is a front elevation view of the trolley;
Figure 3 is a perspective view of a part of the trolley according to the invention, with the box-like structure of the trolley shown schematically in phantom lines;
Figure 4 is a view of the same part as in Figure 3, with some elements removed for the sake of greater clarity;

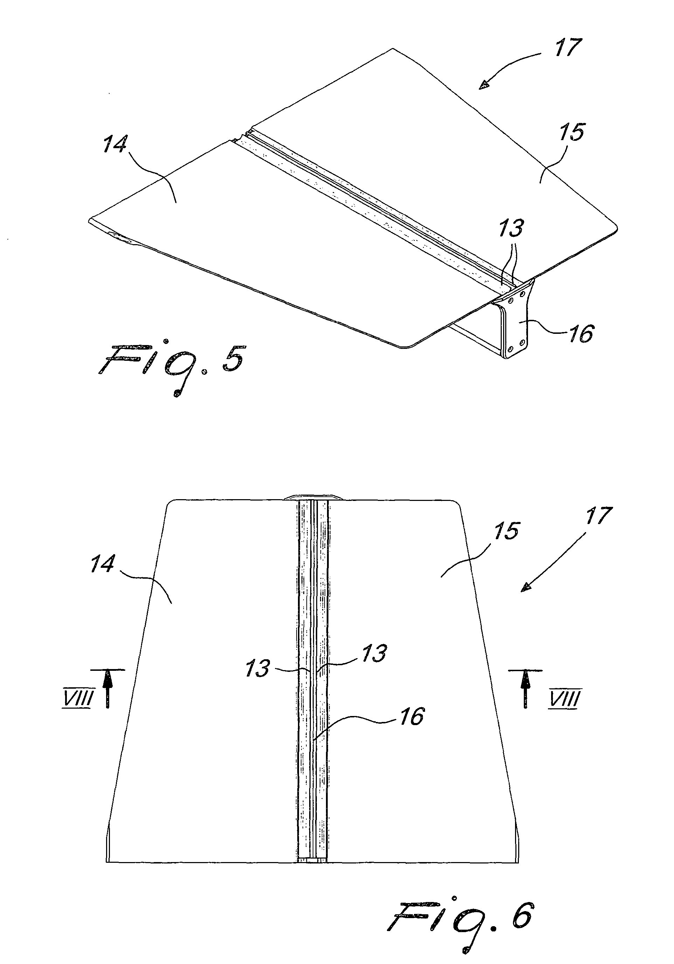

Figure 5 is a perspective view of a modular element of the part shown in Figures 3 and 4;
Figure 6 is a top plan view of the modular element of Figure 5;

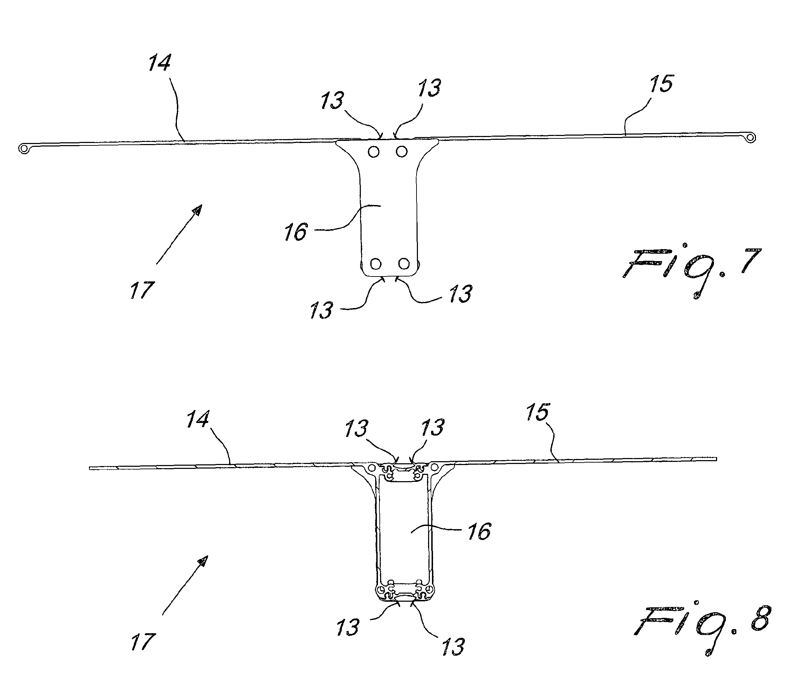

Figure 7 is a front elevation view of the modular element of Figure 5;
Figure 8 is a sectional view of Figure 6, taken along the line VIII-VIII.

With reference to the figures, a trolley according to the invention, generally designated by the reference numeral 1, comprises a box-like structure 2, which is mounted on wheels 3 and forms internally a compartment 4, which is suitable to contain trays 5 to be carried and is divided into at least two chambers by an intermediate vertical partition 6.

The two chambers comprise at least one first chamber 7, 8 and at least one second chamber 9, 10.

Preferably, in the illustrated embodiment, the trolley according to the invention comprises, in addition to the intermediate vertical partition 6, an active wall 11, which is likewise vertical but is oriented at right angles to the intermediate vertical partition 6 which divides the compartment 4 into two parts, each of which is in turn divided into two chambers by the intermediate vertical partition 6, which protrudes with one portion from a face of the active wall 11 and protrudes with another portion from the other face of the active wall 11.

Substantially, in the illustrated embodiment, the trolley according to the invention is provided internally with two first chambers 7, 8, which are designed to contain the regions of the trays 5 which support food which must be kept at a temperature which is higher than the ambient temperature, and two second chambers 9, 10, which are designed to contain the regions of the trays 5 which support food which must be kept at a temperature which is lower than the ambient temperature.

In the illustrated embodiment, the compartment 4 of the trolley according to the invention is limited by an upper wall 31, by a bottom wall 32, by two mutually opposite lateral walls 33 and 34, and is provided with two doors: a front door 21 and a rear door 23, which are pivoted to the box-like structure 2 and can be opened in order to allow access to said two parts of the compartment 4. The trolley is further provided, on the outer side of the lateral wall 33, with a control panel 24 for the trolley.

The fixed walls 31, 32, 33, 34 of the box-like structure 2 and the doors 21 and 23, which delimit the compartment 4, are adequately thermally insulated in order to insulate thermally as much as possible the compartment 4 with respect to the outside environment.

The trays 5 to be used with the trolley according to the invention may be trays of a known type with two regions 5a, 5b, which are designed to contain respectively food to be kept hot and food to be kept cold, separated by an intermediate portion 5c.

The intermediate vertical partition 6 has a plurality of horizontally-elongated slots 12, which are mutually spaced vertically and are intended to receive by sliding the intermediate portion 5c of the trays 5 so that the region 5a of the trays is arranged in the first chamber 7 or 8 and the region 5b is arranged in the second chamber 9 or 10.

At each slot 12, the intermediate vertical partition 6 is provided with sealing means, which are constituted by lip gaskets 13 arranged on the two mutually facing sides of the slot 12. These gaskets 13 can engage the portion 5c of the tray 5 which is inserted in the slot 12 or can engage each other in order to close substantially the slot 12 in the absence of the tray 5.

According to the invention, the trolley comprises first contact elements 14 which can be heated, which are arranged in the first chamber 7, 8, and second contact elements 15 which can be refrigerated, which are arranged in the second chamber 9, 10. These contact elements 14, 15 are designed to make contact with regions of the trays 5 which are arranged respectively in the first chamber 7, 8 and in the second chamber 9, 10.

Preferably, the contact elements 14, 15 are constituted by plate-like elements, which are arranged on substantially horizontal planes and form supporting regions for the lower face of the trays 5.

The contact elements 14 can be heated directly, for example by means of electric resistors or ducts for circulating a heating fluid, which are applied to the contact elements 14 or can be made of a material with high heat conductivity, for example aluminum or copper alloy or in any case metal, and can be connected thermally to heating means constituted for example by electric resistors or ducts for the circulation of a heating fluid which are arranged externally with respect to the contact elements 14.

Likewise, the contact elements 15 can be refrigerated directly for example by way of ducts for circulating a refrigerating fluid, which are applied to the contact elements 15 or can be made of a material with high thermal conductivity, for example aluminum or copper alloy or in any case metal, and can be connected thermally to refrigerating means, constituted for example by ducts for the circulation of a refrigerating fluid which are arranged externally with respect to the contact elements 15.

Preferably, the intermediate vertical partition 6 is composed by superimposed strips 16, and each one of the slots 12 is formed between two contiguous strips 16.

Advantageously, the assembly constituted by the intermediate vertical partition 6 and by the contact elements 14, 15 is composed of stacked modular elements. Each modular element, generally designated by the reference numeral 17, is composed of a strip 16, which is made of thermally insulating material and supports laterally, on mutually opposite sides with respect to the slot 12 delimited by two contiguous strips 16, two contact elements, respectively a first contact element 14, which is connected or coupled thermally to the corresponding heating means and is arranged in the first chamber 7 or 8, and a second contact element 15, which is connected or coupled thermally to the corresponding refrigerating means and is arranged in the second chamber 9 or 10.

The active wall 11 supports and/or accommodates at least part of the heating and/or refrigerating means of the contact elements 14, 15, which are connected with at least one of their sides to the active wall 11.

Such heating means of the first contact elements 14 can be constituted by electric resistors, which are accommodated in the active wall 11 or are connected to the active wall 11. As an alternative, or in combination, the heating means can comprise ducts for circulating a heating fluid (at a temperature which is higher than the ambient temperature), which run at least partially within the active wall 11 or are connected to the active wall 11 and are connected thermally to the first contact elements 14 or are connected to ducts which are applied to the first contact elements 14.

The means for refrigerating the second contact elements 14 can be constituted by ducts for circulating a refrigerating fluid (at a temperature which is lower than the ambient temperature), which run at least partially within the active wall 11 or are connected to the active wall 11 and are connected thermally to the second contact elements 15 or are connected to ducts which are applied to the second contact elements 15.

In order to keep the first chamber 7, 8 and the second chamber 9, 10 at the chosen temperatures, it is possible to provide heating means, constituted for example by electrical resistors or by ducts for circulating a heating fluid, which are arranged in the first chamber 7, 8, and refrigerating means, constituted for example by ducts for the circulation of a refrigerating fluid, which are arranged in the second chamber 9, 10. These electric resistors or ducts for the circulation of a heating fluid or refrigerating fluid can be part of the heating or refrigerating means of the contact elements 14 or 15.

The means for refrigerating the second chamber 9, 10 and/or the contact elements 15 can also comprise containers, applied to the active wall 11 and/or to the second contact elements 15, of a eutectic liquid, which is frozen beforehand during the trolley preparation step and release frigories during the use of the trolley to transport and distribute the trays.

If the heating means comprise ducts for the circulation of a heating fluid and the refrigerating means are constituted by ducts for circulating a refrigerating fluid, said ducts can be part of a same refrigeration circuit by using the ducts of the heating fluid as the condenser of the refrigeration circuit and the ducts of the refrigeration fluid as the evaporator of the refrigeration circuit, consequently achieving a saving in the energy consumption for the operation of the trolley.

Again if the heating means comprise ducts for circulating a heating fluid and the refrigerating means are constituted by ducts for circulating a refrigerating fluid, the circuits which feed said ducts can be arranged on board the trolley itself, thus making the trolley autonomous, with the possibility to operate by connection to an electric power source, or can be arranged in a station which is external to the trolley by providing detachable connections between the ducts or two reservoirs, which contain respectively a heating fluid and a refrigerating fluid, which are provided in the external station and the heating and/or refrigerating ducts on board the trolley. In this last case, although the trolley is still autonomous during the transport and distribution of the trays, it does not need to be provided with an onboard electric circuit.

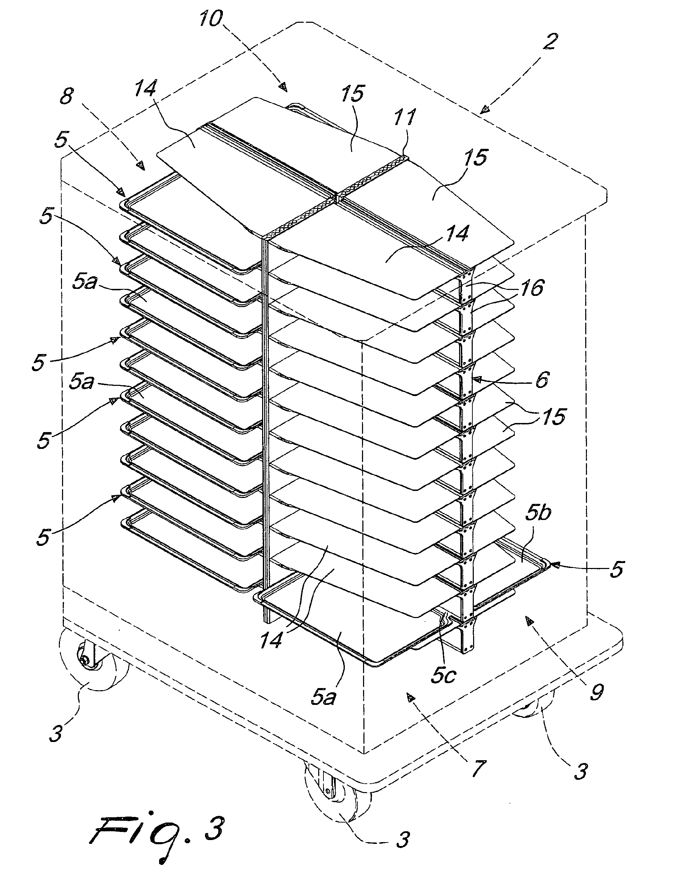

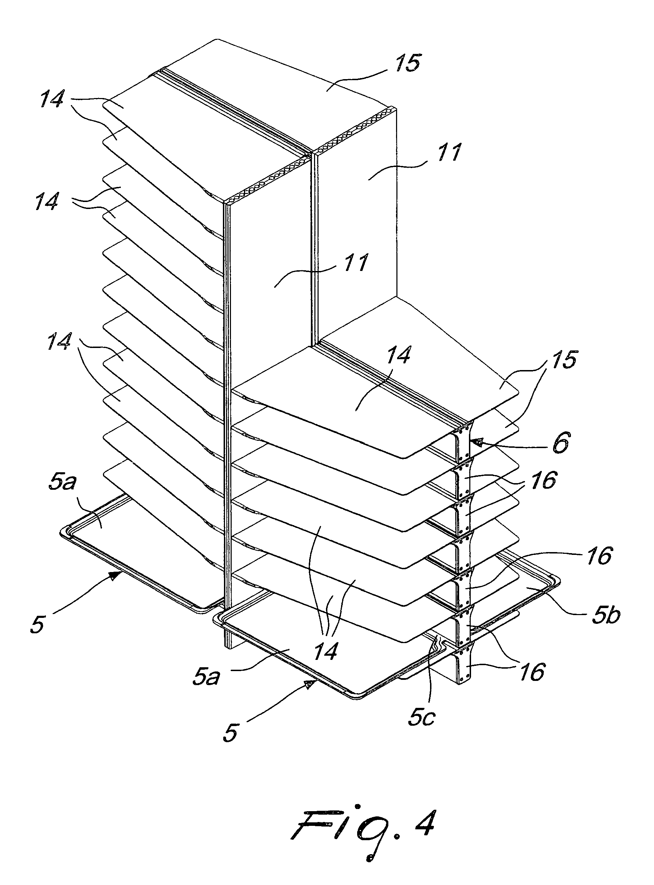

Conveniently, the active wall 11, the intermediate vertical partition 6 and the contact elements 14, 15 constitute a preassembled structure, shown in Figures 3 and 4, which is inserted detachably within the compartment 2 of the trolley.

It should be noted that if the compartment is not divided into two parts, i.e., it has only one first chamber and only one second chamber, the active wall 11 can be embedded in one of the walls which delimit the compartment, for example a fixed wall as a replacement of the rear door 23.

The use of the trolley according to the invention is as follows.

In a preparatory step, the first chambers 7, 8 are heated and the second chambers 9, 10 are refrigerated, by using the corresponding heating and refrigerating means, and the contact elements 14, 15 are also heated and refrigerated. The heating and refrigerating means can be operated by connecting the trolley, as explained above, to the electrical mains or to a station for supplying a heating fluid and a refrigerating fluid.

During the transport and distribution of the trays 5, the trolley can be disconnected from the electric mains or from said supply station so that it can be moved easily.

The hot air in the first chambers 7, 8 and the cold air in the second chambers 9, 10, as well as the heat transferred to the trays 5 by the contact elements 14 and the heat absorbed by the contact elements 15, keep the two regions 5a, 5b of the trays 5 at the chosen temperature for a long period. In practice, in the trolley according to the invention, the trays 5 exchange heat with the trolley not only by convection but also by conduction, achieving an improvement in the effectiveness of this heat exchange, and the assembly constituted by the active wall 11 and by the contact elements 14, 15 further has a high thermal inertia, which allows the trolley to keep the chosen temperatures within the chambers 7, 8, 9, 10 for longer.

In practice it has been found that the trolley according to the invention fully achieves the intended aim and objects, since it is capable of ensuring a distinctly higher performance than obtainable with known types of trolley, particularly as regards keeping the temperature in the two chambers at satisfactory levels.

The trolley thus conceived is susceptible of numerous modifications and variations, which may be within the scope of the appended claims.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A trolley (1) for carrying and distributing food trays (5), provided with at least two chambers (7,8,9,10) at mutually different temperatures, comprising a wheeled box-like structure (2) which forms internally a compartment (4) which is adapted to contain trays (5) to be carried and is divided into at least two chambers (7,8,9,10) by an intermediate vertical partition (6), which has horizontally elongated slots (12) which are mutually spaced vertically, said chambers comprising at least one first chamber (7, 8) and at least one second chamber (9,10) and said slots (12) being adapted to receive an intermediate portion of the trays (5), which can be positioned with one of their regions in said first chamber (7,8) and with another region thereof in said second chamber (9,10), **characterized in that** it comprises first contact elements (14) which can be heated and are arranged in said first chamber (7,8) and second contact elements (15) which can be refrigerated and are arranged in said second chamber (9,10), said contact elements (14,15) being adapted to make contact with regions of the trays (5) which are arranged respectively in said first chamber (7,8) and in said second chamber (9,10).

2. The trolley according to claim 1, **characterized in that** it comprises means for heating said first chamber (7,8) and means for refrigerating said second chamber (9,10) in order to keep said two chambers at mutually different temperatures.

3. The trolley according to claim 1, **characterized in that** said contact elements (14,15) comprise plate-like elements, which are arranged on substantially horizontal planes and form supporting regions for the lower face of the trays (5).

4. The trolley (1) according to one or more of the preceding claims, **characterized in that** said contact elements (14,15) are made, at least with their part intended to make contact with the trays (5), of heat-conducting material, said part of the contact elements being thermally connected to corresponding heating means or to corresponding refrigerating means.

5. The trolley according to one or more of the preceding claims, **characterized in that** sealing means are provided at each slot (12) of said intermediate vertical partition (6) and can engage a portion of the tray (5) which is inserted in said slot or can engage each other in order to close substantially said slot in the absence of a tray.

6. The trolley according to one or more of the preceding claims, **characterized in that** said intermediate vertical partition (6) is composed of stacked strips (16), each one of said slots (12) being formed between two contiguous strips.

7. The trolley according to one or more of the preceding claims, **characterized in that** the assembly constituted by said intermediate vertical partition (6) and by said contact elements (14,15) is composed of stacked modular elements, each modular element being composed of one of said strips (16) which is made of thermally-insulating material and supports laterally, on mutually opposite sides with respect to the slot (12) delimited by two contiguous strips, two contact elements (14,15), respectively a first contact element (14), which is arranged in said first chamber (7,8) and is connected or coupled thermally to the corresponding heating means, and a second contact element (15), which is arranged in said second chamber (9,10) and is connected or coupled thermally to the corresponding refrigerating means.

8. The trolley according to one or more of the preceding claims, **characterized in that** it comprises an active wall (11), which is arranged in said compartment (4) and accommodates at least part of the eating means and/or of the refrigerating means of said contact elements (14,15), said contact elements being connected to said active wall with at least one of their sides.

9. The trolley according to one or more of the preceding claims, **characterized in that** said means for heating the contact elements (14,15) comprise electric resistors which are accommodated in, or connected to, said active wall (11).

10. The trolley according to one or more of the preceding claims, **characterized in that** said means for heating the contact elements (14,15) comprise ducts for the circulation of a heating fluid (at a temperature which is higher than the ambient temperature), at least part of said ducts being arranged inside, or being connected to, said active wall (11).

11. The trolley according to one or more of the preceding claims, **characterized in that** said means for refrigerating the contact elements (14, 15) comprise ducts for the circulation of a refrigerating fluid (at a temperature which is lower than the ambient temperature), at least part of said ducts being arranged inside, or being connected to, said active wall (11).

12. The trolley according to one or more of the preceding claims, **characterized in that** said refrigerating means comprise containers which are applied to said active wall (11) and/or to said second contact elements (15) and contain a eutectic liquid which can be frozen in order to keep said second chamber (9,10) and/or said second contact elements at a preset temperature.

13. The trolley according to one or more of the preceding claims, **characterized in that** said active wall (11) is substantially vertical and is arranged on a plane which is substantially perpendicular to said intermediate vertical partition (6), said active wall dividing said compartment (4) into two parts, each one of said two parts being divided into a first chamber and a second chamber by said intermediate vertical partition (6), which is composed of two portions which are connected to the two opposite faces of said active wall (11).

14. The trolley according to one or more of the preceding claims, **characterized in that** said compartment (4) is limited by an upper wall (31), by a bottom wall (32), by two mutually opposite lateral walls (33,34) and by a front door (21) and a rear door (23), which can be opened in order to access the two portions of said compartment.

15. The trolley according to one or more of the preceding claims, **characterized in that** said active wall (11), said intermediate vertical partition (6) and said contact elements (14,15) constitute a structure which is inserted removably in said compartment (4).

16. The trolley according to one or more of the preceding claims, **characterized in that** said ducts for the circulation of a heating fluid and said ducts for the circulation of a refrigerating fluid belong to a same refrigeration circuit, respectively as a part of the condenser and as a part of the evaporator of said refrigeration circuit.

17. The trolley according to one or more of the preceding claims, **characterized in that** said ducts for the circulation of a heating fluid and said ducts for the circulation of a refrigerating fluid can be connected detachably to an external supply station, which is suitable to dispense said heating fluid and said refrigerating fluid.

18. The trolley according to one or more of the preceding claims, **characterized in that** it comprises means for actuating said heating means and said refrigerating means, said actuation means being mounted on said trolley and being of the electrical type which can be supplied with power by means of an external electrical power source.

## Patentansprüche

1. Wagen (1) zum Transport und Verteilen von Essen auf Tabletts (5), der mindestens zwei Kammern (7, 8, 9, 10) mit gegenseitig unterschiedlichen Temperaturen enthält, umfassend eine mit Rädern versehene kastenähnliche Struktur (2), welche innen einen Raum (4) bildet, welcher zur Aufnahme von zu transportierenden Tabletts (5) bestimmt und in mindestens zwei Kammern (7, 8, 9, 10) durch eine zwischenstehende vertikale Trennwand (6) unterteilt ist, welche horizontal langgestreckte Schlitze (12) besitzt, welche gegenseitig vertikal beabstandet sind, wobei die Kammern mindestens eine erste Kammer (7, 8) und mindestens eine zweite Kammer (9, 10) umfassen und die Schlitze (12) zur Aufnahme eines zwischenabschnitts der Tabletts (5) bestimmt sind, welche mit einem ihrer Bereiche in der ersten Kammer (7, 8) und mit einem anderen ihrer Bereiche in der zweiten Kammer (9, 10) positioniert sein können, **dadurch gekennzeichnet, daß** er erste Kontaktelemente (14), welche beheizbar und in der ersten Kammer (7, 8) angeordnet sind und zweite Kontaktelemente (15), welche gekühlt werden können und in der zweiten Kammer (9, 10) angeordnet sind, umfaßt, wobei die Kontaktelemente (14, 15) dazu bestimmt sind mit Bereichen der Tabletts (5) in Berührung zu treten, welche in der ersten Kammer (7, 8) beziehungsweise in der zweiten Kammer (9, 10) angeordnet sind.

2. Wagen nach Anspruch 1, **dadurch gekennzeichnet, daß** er Mittel für die Beheizung der ersten Kammer (7, 8) und Mittel für das Kühlen der zweiten Kammer (9, 10) umfaßt, um die beiden Kammern auf gegenseitig unterschiedliche Temperaturen zu halten.

3. Wagen nach Anspruch 1, **dadurch gekennzeichnet, daß** die Kontaktelemente (14, 15) plattenähnliche Elemente umfassen, welche auf im wesentlichen horizontalen Ebenen angeordnet sind und Tragbereiche für die Unterfläche der Tabletts (5) bilden.

4. Wagen (1) nach einem oder mehreren der vorangehenden Ansprüche, **dadurch gekennzeichnet, daß** die Kontaktelemente (14, 15), mindestens mit ihrem Teil der dazu bestimmt ist mit den Tabletts in Berührung zu treten, aus wärmeleitendem Material hergestellt sind, wobei dieser Teil der Kontaktelemente thermisch an entsprechende Heizmittel oder an entsprechende Kühlmittel angeschlossen ist.

5. Wagen nach einem oder mehreren der vorangehenden Ansprüche, **dadurch gekennzeichnet, daß** Abdichtmittel an jedem Schlitz (12) der zwischenstehenden vertikalen Trennwand (6) vorgesehen sind, und einen Teil der Tabletts (5) erfassen können, welches in den Schlitz eingeführt ist oder miteinander eingreifen können, um den Schlitz in Ermangelung eines Tabletts im wesentlichen zu schließen.

6. Wagen nach einem oder mehreren der vorangehenden Ansprüche, **dadurch gekennzeichnet, daß** die zwischenstehende vertikale Trennwand (6) aus aufeinandergestapelten Streifen (16) zusammengesetzt ist, wobei jeder der Schlitze (12) zwischen zwei benachbarten Streifen gebildet ist.

7. Wagen nach einem oder mehreren der vorangehenden Ansprüche, **dadurch gekennzeichnet, daß** die durch die zwischenstehende vertikale Trennwand (6) und durch die Kontaktelemente (14, 15) gebildete Baugruppe aus aufeinandergestapelten modularen Elementen zusammengesetzt ist, wobei jedes modulare Element aus einem der Streifen (16) besteht, welcher aus einem wärmedämmenden Material hergestellt ist und seitlich an bezüglich des durch zwei benachbarte Streifen gebildeten Schlitzes (12) gegenseitig entgegengesetzten Seiten zwei Kontaktelemente (14, 15) trägt, beziehungsweise ein erstes Kontaktelement (14), welches in der ersten Kammer (7, 8) angeordnet und angeschlossen oder thermisch gekuppelt mit den entsprechenden Heizmitteln ist, und ein zweites Kontaktelement (15), welches in der zweiten Kammer (9, 10) angeordnet und angeschlossen oder thermisch gekuppelt mit den entsprechenden Kühlmitteln ist.

8. Wagen nach einem oder mehreren der vorangehenden Ansprüche, **dadurch gekennzeichnet, daß** er eine aktive Wand (11) enthält, welche in dem Raum (4) angeordnet ist und mindestens einen Teil der Heizmittel und/oder der Kühlmittel der Kontaktelemente (14, 15) aufnimmt, wobei die Kontaktelemente mit mindestens einer ihrer Seiten an die aktive Wand angeschlossen sind.

9. Wagen nach einem oder mehreren der vorangehenden Ansprüche, **dadurch gekennzeichnet, daß** die Mittel für die Erwärmung der Kontaktelemente (14, 15) elektrische Widerstände enthalten, welche in der aktiven Wand (11) aufgenommen oder darin angeschlossen sind.

10. Wagen nach einem oder mehreren der vorangehenden Ansprüche, **dadurch gekennzeichnet, daß** die Mittel für die Erwärmung der Kontaktelemente (14, 15) Kanäle für die Zirkulation einer Heizflüssigkeit (bei einer Temperatur welche höher ist als die Umgebungstemperatur) umfassen, wobei mindestens ein Teil dieser Kanäle innerhalb der aktiven Wand (11) angeordnet oder daran angeschlossen ist.

11. Wagen nach einem oder mehreren der vorangehenden Ansprüche, **dadurch gekennzeichnet, daß** die Mittel für die Kühlung der Kontaktelemente (14, 15) Kanäle für die Zirkulation einer Kühlflüssigkeit (bei einer Temperatur welche niedriger ist als die Umgebungstemperatur) umfassen, wobei mindestens ein Teil dieser Kanäle innerhalb der aktiven Wand (11) angeordnet oder daran angeschlossen ist.

12. Wagen nach einem oder mehreren der vorangehenden Ansprüche, **dadurch gekennzeichnet, daß** die Kühlmittel Behälter enthalten, welche an der aktiven Wand (11) und/oder an den zweiten Kontaktelementen (15) angebracht sind und eine eutektische Flüssigkeit enthalten, welche gefroren sein kann, um die zweite Kammer (9, 10) und/oder die zweiten Kontaktelemente auf einer vorgegebenen Temperatur zu halten.

13. Wagen nach einem oder mehreren der vorangehenden Ansprüche, **dadurch gekennzeichnet, daß** die aktive Wand (11) im wesentlichen vertikal ist und auf einer Ebene angeordnet ist, welche im wesentlichen rechtwinklig zu der zwischenstehenden vertikalen Trennwand (6) ist, wobei die aktive Wand den Raum (4) in zwei Teile unterteilt, jedes der beiden Teile ist in eine erste Kammer und eine zweite Kammer unterteilt durch die zwischenstehende vertikale Trennwand (6), welche aus zwei Abschnitten zusammengesetzt ist, welche verbunden sind mit den beiden entgegengesetzten Flächen der aktiven Wand (11).

14. Wagen nach einem oder mehreren der vorangehenden Ansprüche, **dadurch gekennzeichnet, daß** der Raum (4) begrenzt ist durch eine obere Wand (31), durch eine Bodenwand (32), durch zwei gegenseitig gegenüberstehende Seitenwände (33, 34) und durch eine Vordertür (21) und eine Rückwandtür (23), welche geöffnet werden können, um auf die beiden Bereiche des Raums Zugriff zu haben.

15. Wagen nach einem oder mehreren der vorangehenden Ansprüche, **dadurch gekennzeichnet, daß** die aktive Wand (11), die zwischenstehende vertikale Trennwand (6) und die Kontaktelemente (14, 15) eine Struktur bilden, welche herausnehmbar in den Raum (4) eingeführt ist.

16. Wagen nach einem oder mehreren der vorangehenden Ansprüche, **dadurch gekennzeichnet, daß** die Kanäle für die Zirkulation einer Heizflüssigkeit und die Kanäle für die Zirkulation einer Kühlflüssigkeit zu demselben Kühlkreislauf als ein Teil des Kondensators und als ein Teil des Verdampfers des Kühlkreislaufs gehören.

17. Wagen nach einem oder mehreren der vorangehenden Ansprüche, **dadurch gekennzeichnet, daß** die Kanäle für die Zirkulation einer Heizflüssigkeit und die Kanäle für die Zirkulation einer Kühlflüssigkeit abnehmbar an eine externe Zufuhrstation angeschlossen werden können, welche geeignet ist die Heizflüssigkeit und die Kühlflüssigkeit auszugeben.

18. Wagen nach einem oder mehreren der vorangehenden Ansprüche, **dadurch gekennzeichnet, daß** er Mittel für die Betätigung der Heizmittel und der Kühlmittel enthält, wobei die Betätigungsmittel an dem Wagen montiert und vom elektrischen Typ sind, welchen Energie mittels einer externen elektrischen Stromquelle zugeführt werden kann.

## Revendications

1. Chariot (1) permettant de transporter et de distribuer des plateaux repas (5), doté d'au moins deux chambres (7, 8, 9, 10) à des températures mutuellement différentes, comprenant une structure de type boîte sur roues (2) qui forme un compartiment (4) conçu pour contenir les plateaux (5) devant être transportés, et est subdivisé en au moins deux chambres (7, 8, 9, 10) par une cloison verticale intermédiaire (6) qui comporte des fentes (12) allongées horizontalement, qui sont mutuellement espacées verticalement, lesdites chambres comprenant au moins une première chambre (7, 8) et au moins une seconde chambre (9, 10), et lesdites fentes (12) étant conçues de manière à recevoir une portion intermédiaire des plateaux (5), qui peuvent être positionnés avec l'une de leurs régions dans ladite première chambre (7, 8) et avec une autre région de ceux-ci dans ladite seconde chambre (9, 10), **caractérisé en ce qu'**il comprend des premiers éléments de contact (14) qui peuvent être chauffés et sont agencés dans ladite première chambre (7, 8), et des seconds éléments de contact (15), qui peuvent être réfrigérés et sont agencés dans ladite seconde chambre (9, 10), lesdits éléments de contact (14, 15) étant conçus afin d'entrer en contact avec les régions des plateaux (5) qui sont agencées respectivement dans ladite première chambre (7, 8) et dans ladite seconde chambre (9,10).

2. Chariot selon la revendication 1, **caractérisé en ce qu'**il comprend des moyens permettant de chauffer ladite première chambre (7, 8) et des moyens permettant de réfrigérer ladite seconde chambre (9, 10) afin de maintenir lesdites deux chambres à des températures mutuellement différentes.

3. Chariot selon la revendication 1, **caractérisé en ce que** lesdits éléments de contact (14, 15) comprennent des éléments de type plaque, qui sont agencés sur des plans sensiblement horizontaux et forment des régions de support pour la face inférieure des plateaux (5).

4. Chariot (1) selon une ou plusieurs des revendications précédentes, **caractérisé en ce que** lesdits éléments de contact (14, 15) sont réalisés, au moins au niveau de leur partie devant entrer en contact avec les plateaux (5), dans un matériau thermoconducteur, ladite partie des éléments de contact étant raccordée par voie thermique aux moyens chauffants correspondants ou aux moyens réfrigérants correspondants.

5. Chariot selon une ou plusieurs des revendications précédentes, **caractérisé en ce que** des moyens d'étanchéité sont prévus au niveau de chaque fente (12) de ladite cloison verticale intermédiaire (6) et peuvent s'engager avec une portion du chariot (5) qui est insérée dans ladite fente ou peuvent s'engager les uns les autres afin de fermer sensiblement ladite fente en l'absence d'un plateau.

6. Chariot selon une ou plusieurs des revendications précédentes, **caractérisé en ce que** ladite cloison verticale intermédiaire (6) est constituée de bandes empilées (16), chacune desdites fentes (12) étant ménagée entre deux bandes contiguës.

7. Chariot selon une ou plusieurs des revendications précédentes, **caractérisé en ce que** l'ensemble constitué de ladite cloison verticale intermédiaire (6) et desdits éléments de contact (14, 15) comprend des éléments modulaires empilés, chaque élément modulaire étant constitué de l'une desdites bandes (16), qui est réalisée dans une matière thermo-isolante et supporte latéralement, sur les faces mutuellement opposées par rapport à la fente (12) délimitée par deux bandes contiguës, deux éléments de contact (14, 15), à savoir respectivement un premier élément de contact (14) qui est agencé dans ladite première chambre (7, 8) et est raccordé ou couplé par voie thermique aux moyens chauffants correspondants, et un second élément de contact (15) qui est agencé dans ladite seconde chambre (9, 10) et est raccordé ou couplé par voie thermique aux moyens réfrigérants correspondants.

8. Chariot selon une ou plusieurs des revendications précédentes, **caractérisé en ce qu'**il comprend une paroi active (17) qui est agencée dans ledit compartiment (4) et loge au moins une partie des moyens chauffants et/ou des moyens réfrigérants desdits éléments de contact (14, 15), lesdits éléments de contact étant raccordés à ladite paroi active avec au moins l'une de leurs faces.

9. Chariot selon une ou plusieurs des revendications précédentes, **caractérisé en ce que** lesdits moyens permettant de chauffer les éléments de contact (14, 15) comprennent des résistances électriques qui sont logées dans ladite paroi active (11) ou raccordées à celle-ci.

10. Chariot selon l'une ou plusieurs des revendications précédentes, **caractérisé en ce que** lesdits moyens permettant de chauffer les éléments de contact (14, 15) comprennent des conduits permettant la circulation d'un fluide chauffant (à une température supérieure à la température ambiante), au moins une partie desdits conduits étant agencée à l'intérieur de ladite paroi active (11) ou raccordée à celle-ci.

11. Chariot selon une ou plusieurs des revendications précédentes, **caractérisé en ce que** lesdits moyens permettant de réfrigérer les éléments de contact (14, 15) comprennent des conduits permettant la circulation d'un fluide réfrigérant (à une température inférieure à la température ambiante), au moins une partie desdits conduits étant agencée à l'intérieur de ladite paroi active (11) ou raccordée à celle-ci.

12. Chariot selon une ou plusieurs des revendications précédentes, **caractérisé en ce que** lesdits moyens réfrigérants comprennent des conteneurs qui sont appliqués à ladite paroi active (11) et/ou auxdits seconds éléments de contact (15) et contiennent un liquide eutectique qui peut être congelé afin de maintenir ladite seconde chambre (9, 10) et/ou lesdits seconds éléments de contact à une température prédéfinie.

13. Chariot selon une ou plusieurs des revendications précédentes, **caractérisé en ce que** ladite paroi active (11) est sensiblement verticale et agencée sur un plan sensiblement perpendiculaire à ladite cloison verticale intermédiaire (6), ladite paroi active divisant ledit compartiment (4) en deux parties, chacune desdites deux parties étant subdivisée en une première chambre et une seconde chambre par ladite cloison verticale intermédiaire (6), qui est constituée de deux portions qui sont raccordées aux faces opposées de ladite paroi active (11).

14. Chariot selon une ou plusieurs des revendications précédentes, **caractérisé en ce que** ledit compartiment (4) est délimité par une paroi supérieure (31), par une paroi inférieure (32), par deux parois latérales mutuellement opposées (33, 34) et par une porte avant (21) et une porte arrière (23), qui peuvent être ouvertes afin d'accéder aux deux portions dudit compartiment.

15. Chariot selon une ou plusieurs des revendications précédentes, **caractérisé en ce que** ladite paroi active (11), ladite cloison verticale intermédiaire (6) et lesdits éléments de contact (14, 15) constituent une structure qui est insérée de manière amovible dans ledit compartiment (4).

16. Chariot selon une ou plusieurs des revendications précédentes, **caractérisé en ce que** lesdits conduits permettant la circulation d'un fluide chauffant et lesdits conduits permettant la circulation d'un fluide réfrigérant appartiennent à un même circuit réfrigérant, respectivement en tant que partie du condenseur et en tant que partie de l'évaporateur dudit circuit réfrigérant.

17. Chariot selon une ou plusieurs des revendications précédentes, **caractérisé en ce que** lesdits conduits permettant la circulation d'un fluide chauffant et lesdits conduits permettant la circulation d'un fluide réfrigérant peuvent être raccordés de manière amovible à un poste d'alimentation externe, qui est approprié afin de délivrer ledit fluide chauffant et ledit fluide réfrigérant.

18. Chariot selon une ou plusieurs des revendications précédentes, **caractérisé en ce qu'**il comprend des moyens permettant d'actionner lesdits moyens chauffants et lesdits moyens réfrigérants, lesdits moyens d'actionnement étant montés sur ledit chariot et étant du type électrique qui peut être alimenté en énergie à l'aide d'une source d'énergie électrique externe.
